# EUROPEAN PATENT APPLICATION

(11) **EP 4 759 517 A1**
(43) Date of publication of application: **17.06.2026**
(21) Application number: 25772300.7
(22) Date of filing: 14.01.2025
(51) Int. Cl.: B29C 65/00, B29C 65/78, H01M 50/105, B29L 31/34, B29L 31/00

(54) **POUCH-TYPE SECONDARY BATTERY FOLDING DEVICE AND POUCH-TYPE SECONDARY BATTERY FOLDING METHOD USING SAME**

(30) Priority: 14.03.2024 KR 20240035527
(71) Applicant: LG Energy Solution, Ltd., Seoul 07335 (KR)
(72) Inventor: KWON, Myung Bin, Daejeon 34122 (KR)
(74) Representative: Plasseraud IP
(86) International application number: PCT/KR2025/000840
(87) International publication number: WO 2025/192861

(57) **Abstract**

Disclosed are a pouch-shaped secondary battery folding apparatus including a first seating portion having a seating recess configured to allow a cup portion of a battery case and a flat portion of one side of the battery case to be seated therein, a second seating portion configured to allow an other side of the battery case to be seated thereon, and a position adjustment portion configured to adjust the width of the seating recess such that the width of the seating recess corresponds to the width of the cup portion and a pouch-shaped secondary battery folding method using the same.

## Description

### [Technical Field]

This application claims the benefit of priority to Korean Patent Application No. 2024-0035527 filed on March 14, 2024, the disclosure of which is incorporated herein by reference in its entirety.

The present invention relates to a pouch-shaped secondary battery folding apparatus and a pouch-shaped secondary battery folding method using the same, and more particularly to a pouch-shaped secondary battery folding apparatus for folding a pouch-shaped battery case during a process of manufacturing a pouch-shaped secondary battery and a pouch-shaped secondary battery folding method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical process of manufacturing a pouch-shaped lithium secondary battery includes a forming process of pressing the area of a battery case made of a laminate sheet corresponding to the area of an electrode assembly to form a concave cup. The electrode assembly is seated in the cup, and the battery case is folded.

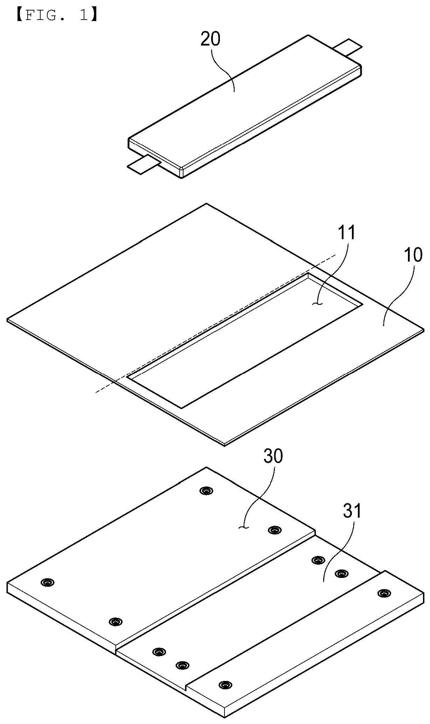

FIG. 1 is a view showing a battery case and an electrode assembly being seated on a conventional pouch-shaped secondary battery folding apparatus.

Referring to FIG. 1, when a conventional pouch-shaped secondary battery is folded, an electrode assembly 20 is received in a cup portion 11 formed on one side of a battery case 10, the battery case 10 is seated on the folding apparatus 30, and the other side of the battery case, on which the electrode assembly 20 is not seated, is folded in one direction.

At this time, in the conventional pouch-shaped secondary battery folding apparatus 30, the width of a recess portion 31 configured to fix the cup portion 11 is fixed, and therefore a new folding apparatus must be manufactured when the size of the cup portion 11 changes.

In addition, if a gap occurs between the cup portion 11 and the recess portion 31 due to tolerance, etc. and the cup portion 11 is not properly fixed, secondary batteries may be defective.

### (Prior Art Document)

(Patent Document 1) Korean Registered Patent Publication No. 10-2618552

### [Disclosure]

### [Technical Problem]

The present invention has been made in view of the above problems, and it is an object of the present invention to provide a pouch-shaped secondary battery folding apparatus capable of being used without replacement even if the size of a cup portion of a battery case changes, and a pouch-shaped secondary battery folding method using the same.

It is another object of the present invention to provide a pouch-shaped secondary battery folding apparatus capable of securely fixing a cup portion while minimizing damage to the cup portion, thereby reducing the defect rate of secondary batteries, and a pouch-shaped secondary battery folding method using the same.

### [Technical Solution]

As a technical means for achieving the above objects, a pouch-shaped secondary battery folding apparatus according to an embodiment of the present invention includes a first seating portion (100) having a seating recess (110) configured to allow a cup portion (11) of a battery case (10) and a flat portion (12) of one side of the battery case to be seated therein, a second seating portion (200) configured to allow an other side of the battery case (10) to be seated thereon, and a position adjustment portion (300) configured to adjust the width of the seating recess (110) such that the width of the seating recess (110) corresponds to the width of the cup portion (11).

Also, in the pouch-shaped secondary battery folding apparatus according to the embodiment of the present invention, the position adjustment portion (300) may be disposed in the seating recess (100) such that one side surface of the position adjustment portion faces one side wall of the seating recess (110).

Also, in the pouch-shaped secondary battery folding apparatus according to the embodiment of the present invention, the position adjustment portion (300) may include a long hole (310), and the first seating portion (100) may include a fastening hole (120) configured to communicate with the long hole (310).

Also, the pouch-shaped secondary battery folding apparatus according to the embodiment of the present invention may further include a fastening member (400) extending through both the long hole (310) and the fastening hole (120) for fastening in the state in which the long hole (310) and the fastening hole (120) overlap each other.

Also, in the pouch-shaped secondary battery folding apparatus according to the embodiment of the present invention, the long hole (310) of the position adjustment portion (300) may extend in a width direction of the seating recess (110).

Also, in the pouch-shaped secondary battery folding apparatus according to the embodiment of the present invention, the position adjustment portion (300) may be configured to be spaced apart from the one side wall of the seating recess (110) so as to correspond to the extension length of the long hole (310).

Also, in the pouch-shaped secondary battery folding apparatus according to the embodiment of the present invention, the position adjustment portion (300) may include a side surface facing the one side wall of the seating recess (110) with an insertion recess (320), and the first seating portion (100) may include a through-hole (130) through the first seating portion (100) at the position corresponding to the insertion recess (320).

Also, the pouch-shaped secondary battery folding apparatus according to the embodiment of the present invention may further include a cylinder member (500) connected to the insertion recess (320) through the through-hole (130) in the state in which the through-hole (130) and the insertion recess (320) overlap each other.

Also, in the pouch-shaped secondary battery folding apparatus according to the embodiment of the present invention, the position adjustment portion (300) may be configured to be spaced apart from the one side wall of the seating recess (110) by the operation of the cylinder member (500).

Also, in the pouch-shaped secondary battery folding apparatus according to the embodiment of the present invention, the position adjustment portion (300) may include an elastic material.

Also, the pouch-shaped secondary battery folding apparatus according to the embodiment of the present invention may further include a suction member (600) configured to suction the other surface of the battery case (10) such that the state in which the battery case (10) is seated on the first seating portion (100) and the second seating portion (200) is maintained.

Also, in the pouch-shaped secondary battery folding apparatus according to the embodiment of the present invention, the first seating portion (100) or the second seating portion (200) may be configured to be folded such that one surface of the first seating portion (100) and one surface of the second seating portion (200) face each other.

In addition, a pouch-shaped secondary battery folding method using the pouch-shaped secondary battery folding apparatus according to the embodiment of the present invention includes (S1) seating a cup portion (11) and a flat portion (12) of a battery case (10) on the first seating portion (100) having the seating recess (110) formed therein and the second seating portion (200), respectively, (S2) seating an electrode assembly (20) in the cup portion (11), and (S3) folding the first seating portion (100) or the second seating portion (200), wherein the pouch-shaped secondary battery folding method further includes adjusting the width of the seating recess (110) through the position adjustment portion (200) so as to correspond to the width of the cup portion (11) before step (S2).

Also, the pouch-shaped secondary battery folding method according to the embodiment of the present invention may further include suctioning the other surface of the battery case (10) through the suctioning member (600) before step (S3).

### [Advantageous Effects]

As is apparent from the above description, in a pouch-shaped secondary battery folding apparatus according to the present invention and a pouch-shaped secondary battery folding method using the same, even if the size of a cup portion changes, a position adjustment portion capable of adjusting the width of a seating recess in which the cup portion is seated is provided, whereby it is possible to fold secondary batteries having various specifications.

Also, in the pouch-shaped secondary battery folding apparatus according to the present invention and the pouch-shaped secondary battery folding method using the same, even if the size of the cup portion changes, the position adjustment portion capable of adjusting the width of the seating recess in which the cup portion is seated is provided, whereby it is possible to securely fix the cup portion while minimizing damage to the cup portion, and therefore it is possible to reduce the defect rate of secondary batteries.

### [Description of Drawings]

FIG. 1 is a view showing a battery case and an electrode assembly being seated on a conventional pouch-shaped secondary battery folding apparatus.
FIG. 2 is a perspective view illustrating a pouch-shaped secondary battery folding apparatus according to a first embodiment of the present invention.
FIG. 3 is a view showing a battery case and an electrode assembly being seated on the pouch-shaped secondary battery folding apparatus according to the first embodiment of the present invention.
FIG. 4 is a side view showing the state in which the battery case and the electrode assembly are seated on the pouch-shaped secondary battery folding apparatus according to the first embodiment of the present invention.
FIG. 5 is a view illustrating the state in which a position adjustment portion of the pouch-shaped secondary battery folding apparatus according to the first embodiment of the present invention is located at a first position.
FIG. 6 is a view illustrating the state in which the position adjustment portion of the pouch-shaped secondary battery folding apparatus according to the first embodiment of the present invention is located at a second position.
FIG. 7 is a view illustrating the state in which a position adjustment portion of a pouch-shaped secondary battery folding apparatus according to a second embodiment of the present invention is located at a first position.
FIG. 8 is a view illustrating the state in which the position adjustment portion of the pouch-shaped secondary battery folding apparatus according to the second embodiment of the present invention is located at a second position.
FIG. 9 is a flowchart illustrating a method of folding a pouch-shaped secondary battery using the pouch-shaped secondary battery folding apparatus according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped secondary battery folding apparatus according to the present invention will be described.

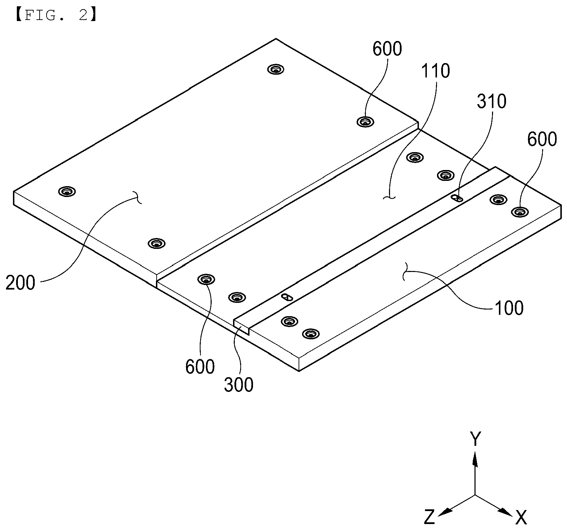

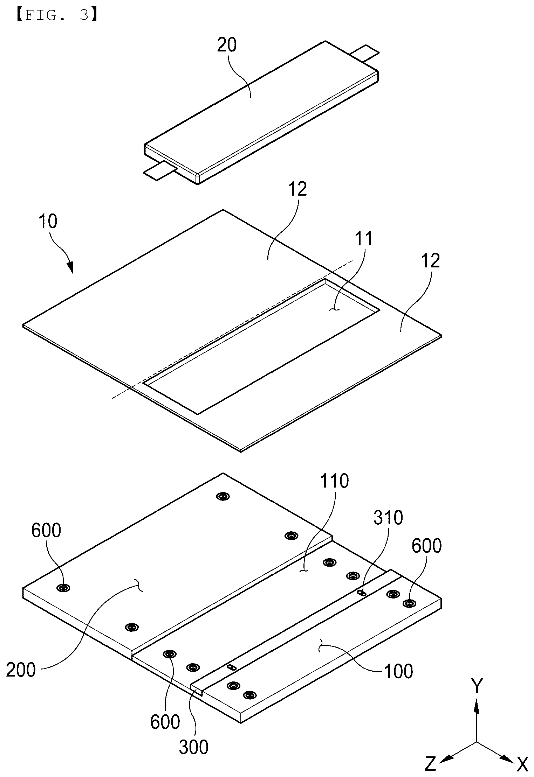

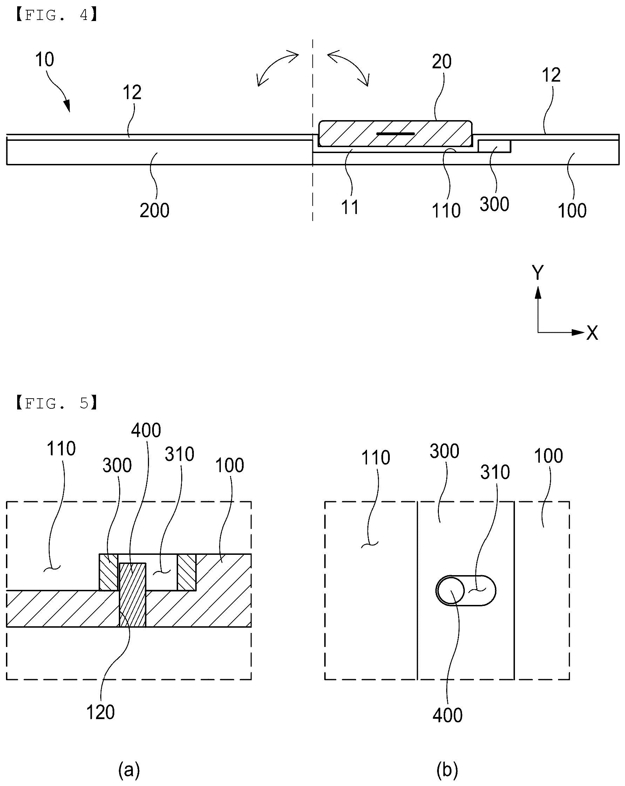

FIG. 2 is a perspective view illustrating a pouch-shaped secondary battery folding apparatus according to a first embodiment of the present invention, FIG. 3 is a view showing a battery case and an electrode assembly being seated on the pouch-shaped secondary battery folding apparatus according to the first embodiment of the present invention, and FIG. 4 is a side view showing the state in which the battery case and the electrode assembly are seated on the pouch-shaped secondary battery folding apparatus according to the first embodiment of the present invention.

Referring to FIGs. 2 to 4, the pouch-shaped secondary battery folding apparatus according to the first embodiment of the present invention includes a first seating portion 100, a second seating portion 200, a position adjustment portion 300, a fastening member 400, and a suction member 600.

First, one side of the battery case 10 is seated on the first seating portion 100. Specifically, the first seating portion 100 is provided with a seating recess configured to allow a cup portion 11 provided on one side of the battery case 10 to be seated therein, and a flat portion 12 of one side of the battery case 10 is seated near the seating recess 110.

Here, the seating recess 110 may be formed in a larger shape than the size of the cup portion 11.

The other side of the battery case 10 may be seated on the second seating portion 200. Although the figures show that the second seating portion 200 is flat, a seating recess (not shown) may be formed in the second seating portion such that the cup portion can be seated in the seating recess if the cup portion is also provided on the other side of the battery case.

The first seating portion 100 or the second seating portion 200 may be folded such that one surface (12 o'clock direction in FIG. 4) of the first seating portion 100 and one surface (12 o'clock direction in FIG. 4) of the second seating portion 200 face each other.

For example, a rotation axis (not shown) may be located between the first seating portion 100 and the second seating portion 200 such that the first seating portion 100 or the second seating portion 200 can be rotated about the rotation axis (not shown).

More specifically, the second seating portion 200 may be rotated about the rotation axis (not shown). Accordingly, the second seating portion 200 may be folded such that one surface of the second seating portion 200 faces one surface of the first seating portion 100, whereby the battery case 10 seated on one surface of the first seating portion 100 and one surface of the second seating portion 200 may be folded about the rotation axis (not shown).

Of course, the first seating portion 100 may not be rotated, and the second seating portion 200 may be folded such that the second seating portion is rotated 180° and comes into tight contact with an upper surface of the first seating portion 100.

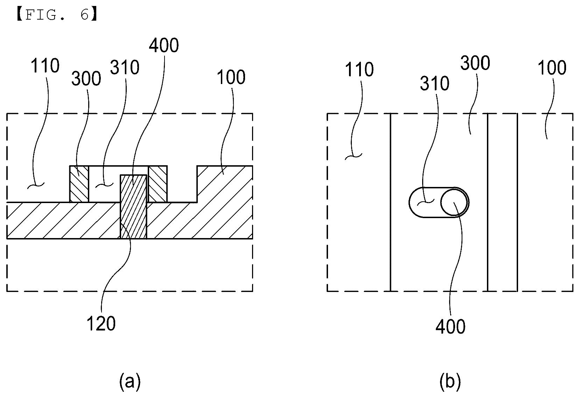

FIG. 5 is a view illustrating the state in which the position adjustment portion of the pouch-shaped secondary battery folding apparatus according to the first embodiment of the present invention is located at a first position, and FIG. 6 is a view illustrating the state in which the position adjustment portion of the pouch-shaped secondary battery folding apparatus according to the first embodiment of the present invention is located at a second position.

Referring to FIGs. 2 to 6, the position adjustment portion 300 may be configured to adjust the width of the seating recess 110 such that the width of the seating recess 110 corresponds to the width of the cup portion 11.

The position adjustment portion 300 may be located in the seating recess 110. More specifically, one side surface (3 o'clock direction in FIG. 4) of the position adjustment portion 300 may be disposed so as to face one side wall (3 o'clock direction in FIG. 4) of the seating recess 110. For example, one side surface of the position adjustment portion 300 may be disposed in contact with one side wall of the seating recess 110, which may be the first position of the position adjustment portion 300.

In addition, a long hole 310 may be formed in the position adjustment portion 300. For example, the long hole 310 may be formed such that one surface (12 o'clock direction in (a) of FIG. 5) and the other surface (6 o'clock direction in (a) of FIG. 5) of the position adjustment portion 300 communicate with each other, and may be formed in the shape of a long hole (long slot hole) extending in a width direction (3 o'clock to 9 o'clock direction in (b) of FIG. 5) of the seating recess 110.

A fastening hole 120 configured to communicate with the long hole 310 may be formed in the first seating portion 100. The fastening hole 120 may be formed at the position corresponding to the position of the long hole 310 so as to communicate with the long hole 310.

In addition, the fastening member 400 may extend through both the long hole 310 and the fastening hole 120 for fastening in the state in which the long hole 310 and the fastening hole 120 overlap each other. For example, a female thread may be formed at each of an inner surface of the long hole 310 and an inner surface of the fastening hole 120, and a male thread may be formed at an outer surface of the fastening member 400; however, the present invention is not necessarily limited thereto.

In addition, it is preferable for an upper part of the fastening member 400 not to protrude above the first seating portion 100 in the state in which the fastening member 400 extends through both the long hole 310 and the fastening hole 120 for fastening. That is, when the flat portion 12 of one side of the battery case 10 is in tight contact with an upper surface of the position adjustment portion 300, it is preferable for the length of the fastening member 400 to be equal to or less than the height of the first seating portion 100 such that the battery case 10 is not deformed by the fastening member 400.

The position adjustment portion 300 may be spaced apart from one side wall of the seating recess 110 so as to correspond to the extension length of the long hole 310.

In addition to the first position, which is the position at which one side surface of the position adjustment portion is in contact with one side wall of the seating recess 110, the position adjustment portion 300 may be located at the position at which one side surface of the position adjustment portion is located at the farthest distance from one side wall of the seating recess 110 along the long hole 310, which may be a second position of the position adjustment portion 300. Of course, it is obvious that the position adjustment portion 300 can be located anywhere between the first position and the second position along the long hole 310.

As a result, the width of the seating recess 110 may be adjusted by the position adjustment portion 300. For example, the width of the seating recess 110 when the position adjustment portion 300 is located at the first position may be greater than the width of the seating recess 110 when the position adjustment portion 300 is located at the second position.

Accordingly, the position adjustment portion 300 may adjust the width of the seating recess 110 so as to correspond to the width of the cup portion 11 seated therein.

Here, the position adjustment portion 300 may be made of an elastic material. For example, the position adjustment portion 300 may be made of at least one selected from among soft, elastically deformable materials, such as styrene/butadiene rubber, 1,2-polybutadiene, a styrene-based block copolymer, a polyvinyl chloride resin, a polyvinyl chloride/nitrile rubber composite, porous polycarbonate (PC), polyurethane, polymer foam, silicone, urethane, epoxy, and rubber. In addition, the position adjustment portion may be made of any other material capable of performing a shock absorption function while including fiber.

When the position adjustment portion 300 is made of the aforementioned material, it is possible to prevent damage to the cup portion 11 when the position adjustment portion is in tight contact with the cup portion 11 and to reliably prevent the movement of the cup portion 11.

In addition, it is preferable for the height of the position adjustment portion 300 not to protrude above the first seating portion 100 when the position adjustment portion 300 is located in the seating recess 110, and it is more preferable for the height of the position adjustment portion 300 to be located on the same horizontal plane as the first seating portion 100.

The suction member 600 may be configured to suction the other surface of the battery case 10 such that the state in which the battery case 10 is seated on the first seating portion 100 and the second seating portion 200 is maintained.

For example, the suction member 600 may vacuum suction the other surface of the battery case 10 to fix the battery case 10. In addition, after the first seating portion 100 or the second seating portion 200 is rotated so as to be folded such that one surface of the first seating portion 100 and one surface of the second seating portion 200 face each other, air may be blown to one surface of the battery case 10 to release the state in which the battery case 10 is suctioned by the suction member 600.

The suction member 600 may be configured to have a vacuum suction structure capable of suctioning the battery case 10. This structure is known in the art, and therefore a more detailed description thereof will be omitted.

Meanwhile, the battery case 10 may be made of a laminate sheet including an outer covering layer, a metal layer, and an inner covering layer, and the cup portion 11 is formed using a forming device (not shown).

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The electrode assembly 20 may be received in the cup portion 11 of the battery case 10. The electrode assembly 20 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added as needed.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

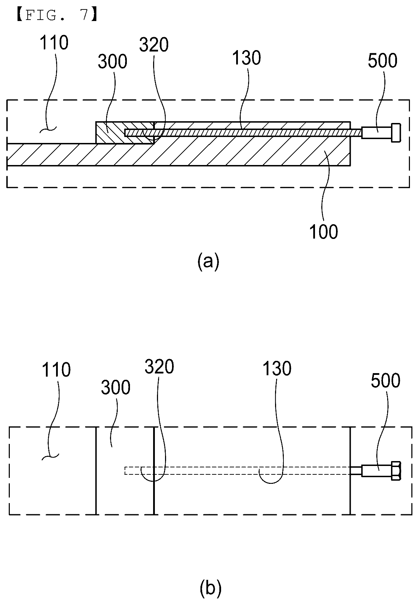

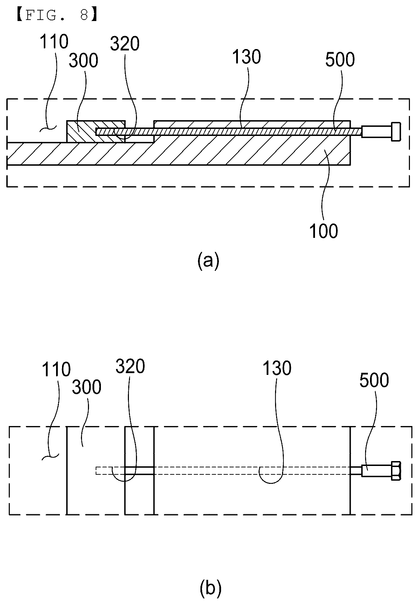

FIG. 7 is a view illustrating the state in which a position adjustment portion of a pouch-shaped secondary battery folding apparatus according to a second embodiment of the present invention is located at a first position, and FIG. 8 is a view illustrating the state in which the position adjustment portion of the pouch-shaped secondary battery folding apparatus according to the second embodiment of the present invention is located at a second position.

The pouch-shaped secondary battery folding apparatus according to the second embodiment of the present invention includes a first seating portion 100, a second seating portion 200, a position adjustment portion 300, and a suction member 600, as in the first embodiment, but the second embodiment includes a cylinder member 500 rather than a fastening member 400, unlike the first embodiment.

More specifically, referring to FIGs. 7 and 8, an insertion recess 320 may be formed on one side surface (3 o'clock direction in (a) of FIG. 7) of the position adjustment portion 300 opposite one side wall of the seating recess 110.

In addition, a through-hole 130 may be formed through the first seating portion 100 at the position of the first seating portion 100 corresponding to the insertion recess 320. For example, the through-hole 130 may be formed to allow one side surface (3 o'clock direction in (a) of FIG. 7) of the first seating portion 100 and one side wall of the seating recess 110 to communicate with each other therethrough.

The cylinder member 500 may be connected to the insertion recess 320 through the through-hole 130 in the state in which the through-hole 130 and the insertion recess 320 overlap each other.

The cylinder member 500 may be connected to the insertion recess 320 of the position adjustment portion 300 to provide driving force such that the position adjustment portion 300 can be moved to one side (3 o'clock direction in (a) of FIG. 7) or the other side (9 o'clock direction in (a) of FIG. 7). For example, the cylinder member 500 may transfer driving force such that one side surface of the position adjustment portion 300 is spaced apart from one side wall of the seating recess 110.

That is, the position adjustment portion 300 may be spaced apart from one side wall of the seating recess 110 by the operation of the cylinder member 500.

Accordingly, the position adjustment portion 300 may adjust the width of the seating recess 110 so as to correspond to the width of the cup portion 11 seated therein.

Hereinafter, a pouch-shaped secondary battery folding method using the pouch-shaped secondary battery folding apparatus according to the present invention will be described.

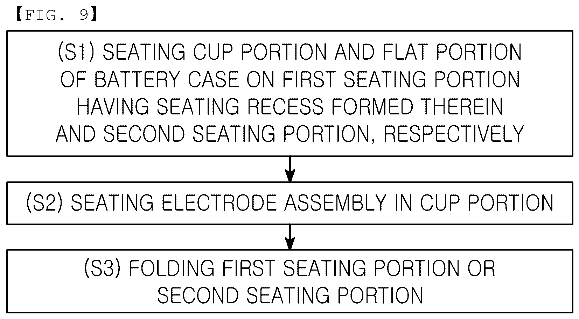

FIG. 9 is a flowchart illustrating a method of folding a pouch-shaped secondary battery using the pouch-shaped secondary battery folding apparatus according to the present invention.

Referring to FIGs. 2 to 6 and 9, a pouch-shaped secondary battery folding method according to a first embodiment of the present invention includes (S1) seating a cup portion 11 of a battery case 10 on the first seating portion 100 and the second seating portion 200 such that the cup portion is seated in the seating recess 110, (S2) seating an electrode assembly 20 in the cup portion 11, and (S3) folding the first seating portion 100 or the second seating portion 200.

Before step (S2), a step of adjusting the width of the seating recess 110 through the position adjustment portion 200 so as to correspond to the width of the cup portion 11 may be further performed. For example, this step may be performed before the cup portion 11 is seated in the seating recess 110 or after the cup portion 11 is seated in the seating recess 110.

In the step of adjusting the width of the seating recess 110, the distance between the position adjustment portion 200 and one side wall of the seating recess 110 may be adjusted according to the extension length of the long hole 310 to adjust the width of the seating recess 110.

Before step (S3), a step of suctioning the other surface of the battery case 10 through the suctioning member 600 may be further included.

After step (S3), the suction force of the suction member 600 may be released or air may be blown to separate a part or the entirety of the battery case 10 in the suctioned state from the folding apparatus.

Meanwhile, a pouch-shaped secondary battery folding method according to a second embodiment of the present invention is the same as the method according to the first embodiment except for adjusting the width of the seating recess 110 using the position adjustment portion 200.

Referring to FIGs. 2 to 4 and 7 to 9, in the step of adjusting the width of the seating recess 110 according to the second embodiment, the width of the seating recess 110 may be adjusted by adjusting the distance between one side surface of the position adjustment portion 300 and one side wall of the seating recess 110 using the cylinder member 500.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Battery case
11: Cup portion 12: Flat portion
20: Electrode assembly
30: Folding apparatus 31: Recess
100: First seating portion
110: Seating recess
120: Fastening hole
130: Through-hole
200: Second seating portion
300: Position adjustment portion
310: Long hole
320: Insertion recess
400: Fastening member
500:Cylinder member
600: Suction member

## Claims

1. A pouch-shaped secondary battery folding apparatus comprising:
a first seating portion having a seating recess, the first seating portion being configured to allow a cup portion of a battery case and a flat portion of one side of the battery case to be seated thereon;
a second seating portion configured to allow an other side of the battery case to be seated thereon; and
a position adjustment portion configured to adjust a width of the seating recess such that the width of the seating recess corresponds to a width of the cup portion.

2. The pouch-shaped secondary battery folding apparatus according to claim 1, wherein the position adjustment portion is disposed in the seating recess such that one side surface of the position adjustment portion faces one side wall of the seating recess.

3. The pouch-shaped secondary battery folding apparatus according to claim 2, wherein
the position adjustment portion includes a long hole, and
the first seating portion includes a fastening hole configured to communicate with the long hole.

4. The pouch-shaped secondary battery folding apparatus according to claim 3, further comprising a fastening member extending through both the long hole and the fastening hole for fastening in a state in which the long hole and the fastening hole overlap each other.

5. The pouch-shaped secondary battery folding apparatus according to claim 3, wherein the long hole of the position adjustment portion extends in a width direction of the seating recess.

6. The pouch-shaped secondary battery folding apparatus according to claim 5, wherein the position adjustment portion is configured to be spaced apart from the one side wall of the seating recess so as to correspond to an extension length of the long hole.

7. The pouch-shaped secondary battery folding apparatus according to claim 2, wherein
the position adjustment portion includes a side surface facing the one side wall of the seating recess with an insertion recess, and
wherein the first seating portion includes a through-hole through the first seating portion at a position corresponding to the insertion recess.

8. The pouch-shaped secondary battery folding apparatus according to claim 7, further comprising a cylinder member connected to the insertion recess through the through-hole in a state in which the through-hole and the insertion recess overlap each other.

9. The pouch-shaped secondary battery folding apparatus according to claim 8, wherein the position adjustment portion is configured to be spaced apart from the one side wall of the seating recess by an operation of the cylinder member.

10. The pouch-shaped secondary battery folding apparatus according to claim 2, wherein the position adjustment portion includes an elastic material.

11. The pouch-shaped secondary battery folding apparatus according to claim 2, further comprising a suction member configured to suction the other surface of the battery case such that a state in which the battery case is seated on the first seating portion and the second seating portion is maintained.

12. The pouch-shaped secondary battery folding apparatus according to claim 2, wherein the first seating portion or the second seating portion is configured to be folded such that one surface of the first seating portion and one surface of the second seating portion face each other.

13. A pouch-shaped secondary battery folding method using the pouch-shaped secondary battery folding apparatus according to any one of claims 1 to 12, the pouch-shaped secondary battery folding method comprising:
(S1) seating a cup portion and a flat portion of a battery case on the first seating portion having the seating recess formed therein and the second seating portion, respectively;
(S2) seating an electrode assembly in the cup portion; and
(S3) folding the first seating portion or the second seating portion, wherein
the pouch-shaped secondary battery folding method further comprises adjusting a width of the seating recess through the position adjustment portion so as to correspond to a width of the cup portion before step (S2).

14. The pouch-shaped secondary battery folding method according to claim 13, further comprising suctioning the other surface of the battery case through the suctioning member before step (S3).
